**Europäisches Patentamt**

**European Patent Office**

**Office européen des brevets**

(19)

(11) Veröffentlichungsnummer: **0 000 186**
**B1**

(12)

# EUROPÄISCHE PATENTSCHRIFT

(21) Anmeldenummer: **78100224.1**

(22) Anmeldetag: **23.06.78**

(51) Int. Cl.³: **C 08 L 69/00**

(54) Thermoplastisch verarbeitbare Polycarbonatmischungen, Verfahren zu deren Bereitung und deren Verwendung zur Herstellung von Formkörpern

(30) Priorität: **01.07.77 DE 2729763**

(43) Veröffentlichungstag der Anmeldung:
**10.01.79 Patentblatt 79/01**

(45) Bekanntmachung des Hinweises auf die Patenterteilung:
**25.06.80 Patentblatt 80/13**

(84) Benannte Vertragsstaaten:
**DE FR GB NL**

(56) Entgegenhaltungen:
**FR - A - 2 159 896**
**FR - A - 2 249 919**
**US - A - 3 166 606**

(73) Patentinhaber: **Bayer AG**
**Zentralbereich Patente, Marken und Lizenzen**
**D - 5090 Leverkusen 1, Bayerwerk (DE)**

(72) Erfinder: **Binsack, Rudolf, Dr.**
**Bethelstrasse 4a**
**D - 4150 Krefeld 1 (DE)**
**Reese, Eckart, Dr.**
**Aggerstrasse 22**
**D - 4047 Dormagen (DE)**
**Tresper, Erhard, Dr.**
**Dahlerdyk 154**
**D - 4150 Krefeld 1 (DE)**
**Wank, Joachim, Ing. grad.**
**Zülpicher Strasse 7**
**D - 4047 Dormagen (DE)**

Courier Press, Leamington Spa, England.

# 0 000 186

Thermoplastisch verarbeitbare Polycarbonatmischungen, Verfahren zu deren Bereitung und deren Verwendung zur Herstellung von Formkörpern

Gegenstand der vorliegenden Erfindung sind Mischungen aus 50 Gew.-% bis 15 Gew.-% an aromatischen Polycarbonaten mit $\overline{M}w$ zwischen 65 000 und 110 000 (Komponente A) und 50 Gew.-% bis 85 Gew.-% an aromatischen Polycarbonaten mit $\overline{M}w$ zwischen 29 000 und 39 000 (Komponente B), wobei die Polycarbonate entweder Homopolycarbonate aus Bis-2-(4-hydroxyphenyl)-propan oder Copolycarbonate aus mindestens 80 Mol-% an Bisphenol A und bis zu 20 Mol-% aus anderen halogenfreien Diphenolen, bezogen auf die Gesamtmolmenge an einkondensierten Diphenolen, sind sowie Verfahren zu ihrer Herstellung und ihre Verwendung zur Herstellung von Formkörpern.

Die aus den erfindungsgemäßen Mischungen herstellbare Schmelze hat eine hohe Standfestigkeit, die daraus erhältlichen Folien haben eine hohe Beständigkeit gegen Spannungsrißkorrosion.

Mischungen aus Polycarbonaten sind bekannt. Siehe beispielsweise DT—OS 2 243 226, DT—OS 2 446 423, US—PS 3 038 874, US—PS 3 334 154, Can—PS 725 726, US—PS 3 647 747, DT—OS 2 354 533 (Le A 15 318) DT—OS 2 248 817 (Le A 14 668) sowie US—PS 3 166 606 und Can—PS 702 625.

In den ersten sieben der genannten Literaturstellen ist jeweils eine Polycarbonatkomponente der Polycarbonatmischungen ein halogenhaltiges Polycarbonat.

In der DT—OS 2 248 817 ist eine Polycarbonatkomponente der Polycarbonatmischungen ein Polycarbonat aus Tetramethylbisphenolen.

Nach US—PS 3 166 606 bzw. der Can—PS 702 625 werden Polycarbonatmischungen mit einem verbesserten Fließverhalten bei der Extrusion und im Spritzguß hergestellt. Die Polycarbonatkomponenten sind über ihre reduzierte Viskosität charakterisiert.

Die hochmolekulare Polycarbonatkomponente hat eine reduzierte Viskosität von mindestens 0,6 dl/g, die niedermolekulare Polycarbonatkomponente hat eine reduzierte Viskosität von nicht mehr als 0,5 dl/g. Darüber hinaus soll die Differenz der reduzierten Viskositäten der Polycarbonatkomponenten nicht weniger als 0,2 dl/g betragen und die reduzierte Viskosität der Mischungen zwischen 0,4 und 0,8 dl/g liegen.

Die üblicherweise für Spritzguß und Extrusion geeigneten Polycarbonate aus Bisphenol A neigen in Gegenwart von bestimmten organischen Flüssigkeiten, die Polycarbonate nicht lösen, sowie in Gegenwart von ungesättigten Verbindungen, beispielsweise Styrollösungen von ungesättigten Polyestern, zu Spannungsrißkorrosion. Da eine Erhöhung des Molekulargewichts $\overline{M}w$ der Polycarbonate auf über 70.000 die Spannungsrißanfälligkeit zwar behebt, aber keine Lösung des Problems darstellt, da derartige Polycarbonate mit $\overline{M}w$ über 70.000 auf Extrudern nicht mehr zu Folien verarbeitet werden können, wurde die Modifizierung von Polycarbonaten durch spezielle Verzweigung gemäß DT—OS 2 254 917 (Le A 14 719) bzw. US—PS 3 931 108 als ein Weg zur Herstellung von spannungsrißfesten Polycarbonat-Extrusionsfolien erfunden.

Der einfachere Weg gemäß vorliegender Erfindung, nämlich durch Zusatz von linearen, hochmolekularen, nicht ohne Molekulargewichtsabbau thermoplastisch verarbeitbaren Polycarbonaten zu üblicherweise für Spritzguß und Extrusion geeigneten Polycarbonaten Polycarbonatmischungen herzustellen, die weder die Nachteile der einen, noch der anderen Polycarbonatkomponente aufweisen, war vom Stand der Technik nicht vorhersehbar.

Aromatische Polycarbonate im Sinne der vorliegenden Erfindung sind solche aus halogenfreien Diphenolen und gegebenenfalls halogenfreien Kettenabbrechern.

Aromatische Polycarbonate im Sinne der Erfindung sind Homopolycarbonate aus Bis-2-(4-hydroxyphenyl)-propan (Bisphenol-A) sowie Copolycarbonate aus mindestens 80 Mol.-% an Bisphenol A und bis zu 20 Mol.-% aus anderen halogenfreien Diphenolen. (Die Molprozente beziehen sich jeweils auf Gesamtmolmenge an einkondensierten Diphenolen.)

Als andere halogenfreie Diphenole sind andere Bis-(hydroxyaryl)-$C_1$—$C_8$-alkane als Bisphenol A sowie Bis-(hydroxyaryl)-$C_5$—$C_6$-cycloalkane geeignet, insbesondere Bis-(4-hydroxyphenyl)-$C_1$—$C_8$alkane und Bis-(4-hydroxyphenyl)-$C_5$—$C_6$-cycloalkane.

Als andere halogenfreie Diphenole sind beispielsweise Bis-(4-hydroxyphenyl)-methan (Bisphenol F),
2.4-Bis(4-hydroxyphenyl)-butan,
1.1-Bis-(4-hydroxyphenyl)-cyclohexan,
2.2-Bis-(3-methyl-4-hydroxyphenyl)-propan,
Bis-(3,5-dimethyl-4-hydroxyphenyl)-methan
2.2-Bis-(3,5-dimethyl-4-hydroxyphenyl)-propan 2,4-Bis-(3,5-dimethyl-4-hydroxyphenyl)-2-methylbutan und
1.1-Bis-(3,5-dimethyl-4-hydroxyphenyl)-cyclohexan geeignet.

Erfindungsgemäß bevorzugte Copolycarbonate enthalten Bis-phenol A und 1.1-Bis-(4-hydroxyphenyl)-cyclohexan (Bis-phenol Z).

Die erfindungsgemäßen Polycarbonatmischungen können Mischungen aus Homopolycarbonaten und/oder Copolycarbonaten sein, wobei sich die Polycarbonatkomponente A von der Polycarbonatkomponente B nicht nur durch das höhere Molekulargewicht unterscheidet, sondern auch durch eine unter-

2

schiedliche Molekularzusammensetzung unterscheiden kann.

Als Polycarbonatkomponente B sind aromatische Polycarbonate mit Molekulargewichten (Gewichtsmittel $\overline{M}w$, beispielsweise gemessen nach Lichtstreumethode) von 29.000 bis 39.000, insbesondere von 30.000 bis 35.000 zu verstehen.

Als Polycarbonatkomponente A sind aromatische Polycarbonate mit Molekulargewichten (Gewichtsmittel $\overline{M}w$, beispielsweise gemessen nach Lichtstreumethode) von 65.000 bis 110.000, insbesondere von 70.000 bis 95.000 zu verstehen.

Sie können nach bekannten Methoden, beispielsweise aus den vorstehend genannten Bisphenolen, hergestellt werden, wobei als Kettenabbrecher beispielsweise Phenol und p-tert.-Butylphenol eingesetzt werden können. Bekannte Polycarbonatherstellungsmethoden sind beispielsweise in US—PS 30 28 365 beschrieben.

Die erfindungsgemäßen Polycarbonatmischungen bestehen aus 50 Gew.-% bis 15 Gew.-%, und insbesondere 40 Gew.-% bis 20 Gew.-% an Polycarbonatkomponente A und 50 Gew.-% bis 85 Gew.-% und insbesondere 60 Gew.-% bis 80 Gew.-% an Polycarbonatkomponenten B, bezogen jeweils auf die Summen an Polycarbonatkomponenten A + B.

Die erfindungsgemäßen Polycarbonatmischungen sind nach einer der folgenden vier Verfahrensvarianten herstellbar:

1. Durch gemeinsames Aufschmelzen der Polycarbonatkomponenten A und B unter gleichzeitiger oder nachfolgender inniger Vermischung der Schmelze und anschließender Extrusion der homogenisierten Schmelze in einer geeigneten Apparatur.

2. Durch Aufschmelzen der Polycarbonatkomponente B in einer geeigneten Apparatur und Eindosierung der Polycarbonatkomponente A in die Schmelze der Komponente B, Homogenisierung und anschließende Extrusion des Gemisches in einer geeigneten Apparatur.

3. Durch Mischen der Lösungen der Polycarbonatkomponenten A und B, Ausdampfen des Lösungsmittels unter Aufschmelzen der Polycarbonatmischung und gleichzeitige Extrusion.

4. Durch Zumischen einer Lösung der Polycarbonatkomponente A zur Schmelze der Polycarbonatkomponente B, Ausdampfen des Lösungsmittels unter Aufschmelzen der Polycarbonatkomponente A, Homogenisierung der Schmelze und anschließende Extrusion in einer geeigneten Apparatur.

Bevorzugte Mischungsverfahren sind die Verfahren 2 bis 4, besonders bevorzugt ist das Mischungsverfahren 4.

Als geeignete Apparaturen für die Herstellung der erfindungsgemäßen Polycarbonatgemische sind Walzen, Knet- und Schneckenmaschinen zu verstehen. Bevorzugte Apparaturen sind Schneckenmaschinen, insbesondere Zweiwellenschneckenmaschinen.

Geeignete Lösungsmittel für die vorstehend genannten Mischungsverfahren sind alle für Polycarbonate bekannten Lösungsmittel, vorzugsweise Methylenchlorid und Chlorbenzol.

Die erfindungsgemäß erhältlichen Polycarbonatmischungen können je nach Verwendungszweck zu Extrusionsformkörpern oder Spritzgußartikeln auf den bekannten Verarbeitungsmaschinen nach bekannten Methoden verformt werden. Besondere Anwendungsgebiete sind Behälter, Rohre, Platten und Folien.

Den erfindungsgemäßen Polycarbonatmischungen können Zusatzstoffe der üblichen Art vor, während oder nach dem Vermischen der Polycarbonatkomponenten zugesetzt werden.

Erwähnt seien in diesem Zusammenhang beispielsweise Farbstoffe, Pigmente, Entformungsmittel, Stabilisatoren gegen Feuchtigkeits-, Hitze- und UV-Einwirkung, Gleitmittel, Füllstoffe, wie Glaspulver, Quarzerzeugnisse, Graphit, Molybdänsulfid, Metallpulver, Pulver höherschmelzender Kunststoffe, z.B. Polytetrafluoräthylenpulver, natürliche Fasern, wie Baumwolle, Sisal und Asbest, ferner Glasfasern der verschiedensten Art, Metallfäden sowie während des Verweilens in der Schmelze der Polycarbonate stabile und die Polycarbonate nicht merklich schädigende Fasern.

*Beispiel 1*

Auf einer Zweiwellenschnecke mit Dosier- und Entgasungsdom wurde ein Polycarbonat mit einem $M_w$ von 30.000 (Komponente B) über eine Dosierwaage in den Einfüllstützen dosiert. Ein Polycarbonat mit einem $M_w$ von 70.000 wurde über eine 2. Dosierwaage in den Dosierdom der 2-Wellenschnecke dem an dieser Stelle bereits aufgeschmolzenen Polycarbonat (Komponente B) zudosiert. Die Dosierwaagen wurden so eingestellt, daß die Mischung der Polycarbonate aus 70 Gew.-% der Komponente B und 30 Gew.-% der Komponente A besteht. Die homogenisierte Schmelze der Mischung wurde über eine Breitschlitzdüse ausgedrückt und über eine Chill-Roll-Anlage zu ca. 40 $\mu$m dicken Folien abgezogen.

Die Folien zeigen im Vergleich zu solchen, die nur aus Komponente B nach dem Extrusionsverfahren hergestellt wurden, folgende Eigenschaften:

|  | Erfindungsgemäße Folie | Folie aus 100 % Komponente B |
|---|---|---|
| Zugfestigkeit [MPa] | 90 | 90 |
| Dehnung [%] | 100 | 100 |
| Restdehnung n. 10 sec. Lagerung in Toluol/n-Propanol 1:3 [%] | 90 | versprödet (< 3 %) |
| Beständigkeit gegen ungesättigte Polyesterharze | beständig | nicht beständig |

*Beispiel 2*

Herstellung von Folien gemäß Beispiel 1 unter Verwendung von 80 Gew.-% Komponente B und 20 Gew.-% eines Polycarbonates mit $M_w$ 95000

| Eigenschaften: | Erfindungsgemäße Folie | Folie aus 100 % Komp. B |
|---|---|---|
| Zugfestigkeit [MPa] | 90 | 90 |
| Dehnung [%] | 110 | 100 |
| Restdehnung nach 10 sec. Lagerung in Toluol /n-Propanol 1:3 [%] | 90 | versprödet (< 3 %) |
| Beständigkeit gegen ungesättigte Polyesterharze | beständig | nicht beständig |

*Beispiel 3*

Eine erfindungsgemäße Mischung, die gemäß Beispiel 1 hergestellt, als Strang ausgepreßt und granuliert wurde, wurde auf einer Flaschenblasanlage zu Flaschen mit einem Inhalt von 1 l bei einer Wandstärke von 2 mm verarbeitet.

Verarbeitungsbedingungen:

| Zylindertemperaturen [°C] | erfindungsgemäße Mischung | 100 % Komp. B |
|---|---|---|
| Einzug | 270°C | 260°C |
| Zone 1 | 275°C | 270°C |
| Zone 2 | 280°C | 270°C |
| Adapter | 280°C | 270°C |
| Staukopf | | |
| Zone 1 | 260°C | 250°C |
| Zone 2 | 270°C | 260°C |
| Düse | 240°C | 240°C |
| Formtemperatur | 70°C | 70°C |

Die aus der erfindungsgemäßen Mischung hergestellte Flasche zeigt gegenüber der Flasche aus 100% Komponente B beim Reinigungs-bzw. Sterilisationstest folgende Eigenschaften:

**0 000 186**

|  | Flasche aus erfindungsgemäße Mischung | Flasche aus 100 % Komp. B |
|---|---|---|
| Anzahl der Reingungszyklen in 4 %iger Sodalösung bei 80°C bis zum Auftreten von Rissen | $\geqslant 100$ | $\leqslant 40$ |
| Anzahl der Sterilisationen bei 135°C bis zum Auftreten von Rissen | $\geqslant 100$ | $\leqslant 60$ |

**Patentansprüche**

1. Mischungen aus 50 Gew.-% bis 15 Gew.-% an aromatischen Polycarbonaten mit $\overline{M}$w zwischen 65 000 und 110 000 (Komponente A) und 50 Gew.-% bis 85 Gew.-% an aromatischen Polycarbonaten mit $\overline{M}$w zwischen 29 000 und 39 000 (Komponente B), wobei die Polycarbonate entweder Homopolycarbonate aus Bis-2-(4-hydroxyphenyl)-propan (Bisphenol A) oder Copolycarbonate aus mindestens 80 Mol-% an Bisphenol A und bis zu 20 Mol-% aus anderen halogenfreien Diphenolen, bezogen auf die Gesamtmolmenge an einkondensierten Diphenolen, sind.

2. Mischungen gemäß Anspruch 1, dadurch gekennzeichnet, daß sie aus 40 Gew.-% bis 20 Gew.-% an Komponente A und 60 Gew.-% bis 80 Gew.-% an Komponente B bestehen.

3. Mischungen gemäß Ansürüchen 1 und 2, dadurch gekennzeichnet, daß die Komponente A ein $\overline{M}$w zwischen 70 000 und 95 000 hat.

4. Mischungen gemäß Ansprüchen 1 und 2, dadurch gekennzeichnet, daß die Komponente B ein $\overline{M}$w zwischen 30 000 und 35 000 hat.

5. Verfahren zur Herstellung der Mischungen gemäß Ansprüchen 1 bis 4, dadurch gekennzeichnet, daß man die Polycarbonatkomponenten A und B gemeinsam aufschmilzt, die Schmelze innig vermischt und anschließend in einer geeigneten Apparatur extrudiert.

6. Verfahren zur Herstellung der Mischungen gemäß Ansprüchen 1 bis 4, dadurch gekennzeichnet, daß man die Polycarbonatkomponente A in die Schmelze der Polycarbonatkomponente B eindosiert, das Gemisch homogenisiert und anschließend in einer geeigneten Apparatur extrudiert.

7. Verfahren zur Herstellung der Mischungen gemäß Ansprüchen 1 bis 4, dadurch gekennzeichnet, daß man eine Lösung der Polycarbonatkomponente A der Schmelze der Polycarbonatkomponente B zumischt, das Lösungsmittel unter Aufschmelzen der Polycarbonatkomponente A ausdampft, die Schmelze homogenisiert und anschließend in einer geeigneten Apparatur extrudiert.

8. Verfahren zur Herstellung der Mischungen gemäß Ansprüchen 1 bis 4, dadurch gekennzeichnet, daß man Lösungen der Polycarbonatkomponenten A und B mischt, das Lösungsmittel unter Aufschmelzen der Polycarbonatmischung ausdampft und gleichzeitig extrudiert.

9. Verwendung der Mischungen gemäß Ansprüchen 1 bis 4 zur Herstellung von Formkörpern nach üblichen Spritzgußverfahren oder Extrusionsverfahren.

10. Verwendung der Mischungen gemäß Ansprüchen 1 bis 4 zur Herstellung von Folien.

**Claims**

1. Mixtures of 50% to 15% by weight of aromatic polycarbonates having $\overline{M}$w (weight average molecular weights) between 65,000 and 110,000 (component A) and 50% to 85% by weight of aromatic polycarbonates with $\overline{M}$w between 29,000 and 39,000 (component B), the polycarbonates being either homopolycarbonates obtained from bis-2-(4-hydroxyphenyl)-propane (bisphenol A) or copolycarbonates obtained from at least 80 mol % of bisphenol A and up to 20 mol % from other halogen-free diphenols, relative to the total molar amount of co-condensed diphenols.

2. Mixtures according to claim 1, characterised in that they comprise 40% to 20% by weight of component A and 60% to 80% of component B.

3. Mixtures according to claims 1 and 2, characterised in that the component A has a $\overline{M}$w of between 70,000 and 95,000.

4. Mixtures according to claims 1 and 2, characterised in that the component B has a $\overline{M}$w between 30,000 and 35,000.

5. A process for the preparation of the mixtures according to claims 1 to 4, characterised in that the polycarbonate components A and B are melted together, the melt is intimately mixed and subsequently extruded in a suitable apparatus.

6. A process for the preparation of the mixtures according to claims 1 to 4, characterised in that the polycarbonate component A is metered into the melt of the polycarbonate component B, the mixture is homogenized and subsequently extruded in a suitable apparatus.

7. A process for the preparation of the mixtures according to claims 1 to 4, characterised in that a solution of the polycarbonate component A is mixed with the melt of the polycarbonate component B, the solvent is evaporated off to produce a melt of polycarbonate component A, the melt is homogenized and subsequently extruded in a suitable apparatus.

8. A process for the preparation of the mixtures according to claims 1 to 4, characterised in that solutions of the polycarbonate components A and B are mixed together, the solvent is evaporated off to produce a melt of the polycarbonate mixture which is simultaneously extruded.

9. The use of the mixtures according to claims 1 to 4 for the preparation of mouldings according to customary injection moulding or extrusion processes.

10. The use of the mixtures according to claims 1 to 4 for the preparation of films.

**Revendications**

1. Des mélanges de 50 à 15 % en poids de polycarbonates aromatiques de poids moléculaire moyen compris entre 65 000 et 110 000 (composant A) et de 50 à 85 % en poids de polycarbonates aromatiques de poids moléculaire moyen compris entre 29 000 et 39 000 (composant B), les polycarbonates étant ou bien des homopolycarbonates de bis-2-(4-hydroxyphényl)-propane (bisphénol A) ou bien des copolycarbonates d'au moins 80 moles % de bisphénol A et jusqu'à 20 moles % d'autres diphénols non halogénés, par rapport à la quantité molaire totale de diphénols incorporés par· condensation.

2. Mélanges suivant la revendication 1, caractérisés en ce qu'ils sont composés de 40 à 20 % en poids de composant A et de 60 à 80 % en poids de composant B.

3. Mélanges suivant l'une des revendications 1 et 2, caractérisés en ce que le poids moléculaire moyen du composant A est compris entre 70 000 et 95 000.

4. Mélanges suivant l'une des revendications 1 et 2, caractérisés en ce que le poids moléculaire moyen du composant B est compris entre 30 000 et 35 000.

5. Procédé de production de mélanges suivant l'une quelconque des revendications 1 à 4, caractérisé en ce qu'il consiste à faire fondre ensemble les polycarbonates A et B qui les constituent, à mélanger intimement la masse fondue, puis à l'extruder dans un appareil convenable.

6. Procédé de production des mélanges suivant l'une quelconque des revendications 1 à 4, caractérisé en ce qu'il consiste à injecter le composant polycarbonate A dans la masse fondue du composant polycarbonate B, à homogénéiser le mélange, puis à l'extruder dans un appareil convenable.

7. Procédé de production des mélanges suivant l'une quelconque des revendications 1 à 4, caractérisé en ce qu'il consiste à adjoindre une solution du composant polycarbonate A à la masse fondue du composant polycarbonate B, à chasser le solvant par évaporation en faisant fondre le composant polycarbonate A, à homogénéiser la masse fondue, puis à l'extruder dans un appareil convenable.

8. Procédé de production des mélanges suivant l'une quelconque des revendications 1 à 4, caractérisé en ce qu'il consiste à mélanger des solutions des composants polycarbonates A et B et à chasser le solvant par évaporation en faisant fondre le mélange de polycarbonates tout en extrudant ce dernier.

9. Utilisation des mélanges suivant l'une quelconque des revendications 1 à 4 dans la production de pièces moulées, par des procédés classiques de moulage par injection ou d'extrusion.

10. Utilisation des mélanges suivant l'une quelconque des revendications 1 à 4 pour la production de feuilles.